# EUROPEAN PATENT APPLICATION

(11) **EP 4 514 000 A1**
(43) Date of publication of application: **26.02.2025**
(21) Application number: 22937785.8
(22) Date of filing: 19.04.2022
(51) Int. Cl.: H04W 72/04, H04L 5/00

(54) **TCI STATE DETERMINING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/087766
(87) International publication number: WO 2023/201547

(57) **Abstract**

The present application relates to the field of mobile communications, and discloses a transmission configuration indication (TCI) state determining method and apparatus, a device, and a storage medium. The method comprises: a terminal receiving indication information transmitted by a network device, wherein the indication information indicates at least one set of TCI states, each set of TCI states comprise at least one of an uplink TCI state and a downlink TCI state or each set of TCI states comprise a joint TCI state, and the joint TCI state is simultaneously applied to uplink transmission and downlink transmission; and according to the indication information, determining a set of TCI states corresponding to each channel/signal. The present disclosure provides a solution for determining a correspondence between a TCI state and a channel/signal, and then performing data transmission with the network device according to the determined TCI state, thereby ensuring the quality of a transmitted signal, and further ensuring the reliability of transmission.

## Description

### TECHNICAL FIELD

The present disclosure relates to the field of communication technologies, and provides a TCI state determination method and an apparatus, a device, and a storage medium.

### BACKGROUND

In a mobile communication system, a network device may communicate with a terminal through a Transmission Reception Point (TRP). The network device may indicate one set of Transmission Configuration Indication (TCI) state to the terminal, and the set of TCI state as indicated corresponds to one TRP. However, if the network device configures multiple TRPs for the terminal, how to indicate a TCI state corresponding to each of the TRPs to the terminal is an urgent problem that needs to be solved.

### SUMMARY

Embodiments of the present disclosure provide a TCI state determination method and apparatus, devices, and a storage medium, so as to provide a solution for determining a correspondence between a TCI state and a channel/signal. Thus, data transmission is performed between a terminal and a network device based on the determined TCI state, so as to ensure the quality of a transmitted signal, thereby ensuring the reliability of transmission. The technical solutions are as follows.

According to one aspect of the present disclosure, a TCI state determination method is provided, which is performed by a terminal. The method includes:
receiving indication information sent by a network device, where the indication information is used to indicate at least one set of transmission configuration indication (TCI) state, each set of TCI state includes at least one of an uplink TCI state or a downlink TCI state, or each set of TCI state includes a joint TCI state, the joint TCI state is applied to both uplink transmission and downlink transmission; and
determining at least one set of TCI state corresponding to each channel/signal based on the indication information.

According to another aspect of the present disclosure, a TCI state determination method is provided, which is performed by a network device. The method includes:
sending indication information to a terminal, where the indication information is used to indicate at least one set of transmission configuration indication (TCI) state, each set of TCI state includes at least one of an uplink TCI state or a downlink TCI state, or each set of TCI state includes a joint TCI state, the joint TCI state is applied to both uplink transmission and downlink transmission; and the indication information is used for the terminal to determine at least one set of TCI state corresponding to each channel/signal.

According to another aspect of the present disclosure, a TCI state determination apparatus is provided, and the device includes:
a receiving module, configured to receive indication information sent by a network device, where the indication information is used to indicate at least one set of transmission configuration indication (TCI) state, each set of TCI state includes at least one of an uplink TCI state or a downlink TCI state, or each set of TCI state includes a joint TCI state, the joint TCI state is applied to both uplink transmission and downlink transmission; and
a determining module, configured to determine at least one set of TCI state corresponding to each channel/signal based on the indication information.

According to another aspect of the present disclosure, a TCI state determination apparatus is provided, which includes:
a sending module, configured to send indication information to a terminal, where the indication information is used to indicate at least one set of transmission configuration indication (TCI) state, each set of TCI state includes at least one of an uplink TCI state or a downlink TCI state, or each set of TCI state includes a joint TCI state, the joint TCI state is applied to both uplink transmission and downlink transmission; and the indication information is used for the terminal to determine at least one set of TCI state corresponding to each channel/signal.

According to another aspect of the present disclosure, a terminal is provided. The terminal includes: a processor; a transceiver connected to the processor; and a memory configured to store instructions executable by the processor. The processor is configured to load and execute the executable instructions to implement the TCI state determination method as described above.

According to another aspect of the present disclosure, a network device is provided. The network device includes: a processor; a transceiver connected to the processor; and a memory configured to store instructions executable by the processor. The processor is configured to load and execute the executable instructions to implement the TCI state determination method as described above.

According to another aspect of the present disclosure, a computer-readable storage medium is provided. The readable storage medium stores an executable program code. The executable program code is loaded and executed by a processor to implement the TCI state determination method in the above aspect.

According to another aspect of the present disclosure, a chip is provided. The chip includes a programmable logic circuit and/or program instructions. When the chip is run on a terminal, the chip is configured to implement the TCI state determination method as described above.

According to another aspect of the present disclosure, a computer program product is provided. When the computer program product is executed by a processor of a terminal, it is used to implement the TCI state determination method of the above aspect.

In the TCI state determination solution provided by the embodiments of the present disclosure, the terminal can determine at least one set of TCI state corresponding to each channel/signal based on indication information, and each channel/signal is transmitted by TRP(s) of the network device, so at least one TRP corresponding to each channel/signal is also determined. Thus, a solution for determining a correspondence between a TCI state and a channel/signal is provided, and then data transmission is performed with a network device based on the determined TCI state, so as to ensure the quality of a transmitted signal, thereby ensuring the reliability of transmission.

### BRIEF DESCRIPTION OF THE DRAWINGS

In order to clearly illustrate the technical solution of the embodiments of the disclosure, a brief description of drawings used in the embodiments is given below. Obviously, the drawings in the following descriptions are only part of the embodiments of the disclosure, and for those skilled in the art, other drawings may be obtained according to these drawings without creative works.
FIG. 1 shows a block diagram of a communication system according to an exemplary embodiment of the present disclosure.
FIG. 2 shows another block diagram of a communication system according to an exemplary embodiment of the present disclosure.
FIG. 3 shows a flow chart of a TCI state determination method according to an exemplary embodiment of the present disclosure.
FIG. 4 shows a flow chart of a TCI state determination method according to an exemplary embodiment of the present disclosure.
FIG. 5 shows a flow chart of a TCI state determination method according to an exemplary embodiment of the present disclosure.
FIG. 6 shows a block diagram of a TCI state determination apparatus according to an exemplary embodiment of the present disclosure.
FIG. 7 shows another block diagram of a TCI state determination apparatus according to an exemplary embodiment of the present disclosure.
FIG. 8 shows a schematic structural diagram of a communication device according to an exemplary embodiment of the present disclosure.

### DETAILED DESCRIPTION

In order to make the objective, the technical solutions and the advantages of the present disclosure clearer, the embodiments of the present disclosure will be further described in detail below with reference to the accompanying drawings.

Exemplary embodiments will be described in detail herein, examples of which are illustrated in the accompanying drawings. When the following description refers to the drawings, the same reference numbers in different drawings refer to the same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

The term used in the present disclosure is for the purpose of only describing particular embodiments and is not intended to be limiting of the disclosure. The singular forms "a", "the", and "this" as used in the present disclosure and the appended claims are intended to include the plural forms as well, unless the context clearly dictates otherwise. It will also be appreciated that the term "and/or" as used herein refers to and includes any and all possible combinations of one or more of the associated listed items.

It should be appreciated that although such terms as first, second and third may be used in the present disclosure to describe various information, the information should not be limited to these terms. These terms are only used to distinguish information of the same type from each other. For example, without departing from the scope of the present disclosure, the first information may also be referred to as second information, and similarly, the second information may also be referred to as first information. Depending on the context, for example, the word "if" as used herein may be interpreted as "when", or "in a case where", or "in response to determining".

It should be noted that all the information (including but not limited to user equipment information, user personal information, etc.), the data (including but not limited to data used for analysis, stored data, displayed data, etc.), and the signals involved in the present disclosure are authorized by the user or fully authorized by all parties, and the collection, use and processing of relevant data need to comply with relevant laws, regulations and standards of relevant countries and regions.

Disclosure scenarios of the present disclosure are explained below.

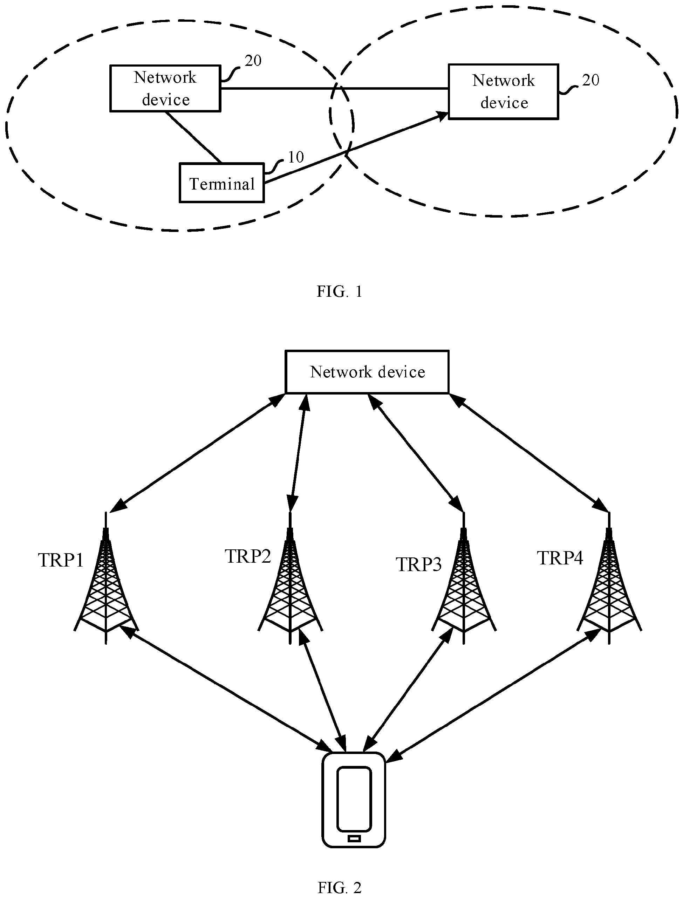

FIG. 1 shows a block diagram of a communication system according to an embodiment of the present disclosure. The communication system may include a terminal 10 and a network device 20.

The number of terminals 10 is usually multiple, and one or more terminals 10 may be distributed in a cell managed by each network device 20. The terminal 10 may include various devices having wireless communication functions, such as, handheld device, vehicle-mounted device, wearable device, computing device, or other processing devices connected to a wireless modem, various forms of User Equipment (UE) and Mobile Station (MS), and so on. For convenience of description, in the embodiments of the present disclosure, the above-mentioned devices are collectively referred to as terminals.

The network device 20 is a device deployed in the access network to provide wireless communication functions for the terminal 10. For convenience of description, in the embodiment of the present disclosure, the above-mentioned devices that provide wireless communication functions for the terminal 10 are collectively referred to as network device. A connection may be established between the network device 20 and the terminal 10 through an air interface, and a communication, including signaling and data interaction, may be performed through the connection. The number of network devices 20 may be multiple, and two adjacent network devices 20 may be communicated in a wired or wireless manner. The terminal 10 may switch between different network devices 20, that is, establish connections with different network devices 20.

The network device 20 may include various forms of macro base stations, micro base stations, relay stations, access points, Transmission Reception Points (TRPs), and so on. In systems using different radio access technologies, devices having network device functions may have different names. For example, in 5G NR (New Radio) systems, they are referred to as gNodeB or gNB. As the communication technology evolves, the name "network device" may change.

In some embodiments, one network device may include one or more TRPs.

For example, as shown in FIG. 2, one network device is configured with 4 TRPs, namely TRP1, TRP2, TRP3 and TRP4. The network device establishes a communication connection with a terminal through these 4 TRPs, and then the network device may communicate with the terminal through 4 TRPs.

In addition, the network device sends indication information to the terminal, to indicate at least one set of TCI state by the indication information, and channels/signals transmitted between the network device and the terminal correspond to at least one set of TCI state, where each channel/signal corresponds to at least one TRP, that is, to determine a TCI state corresponding to each TRP.

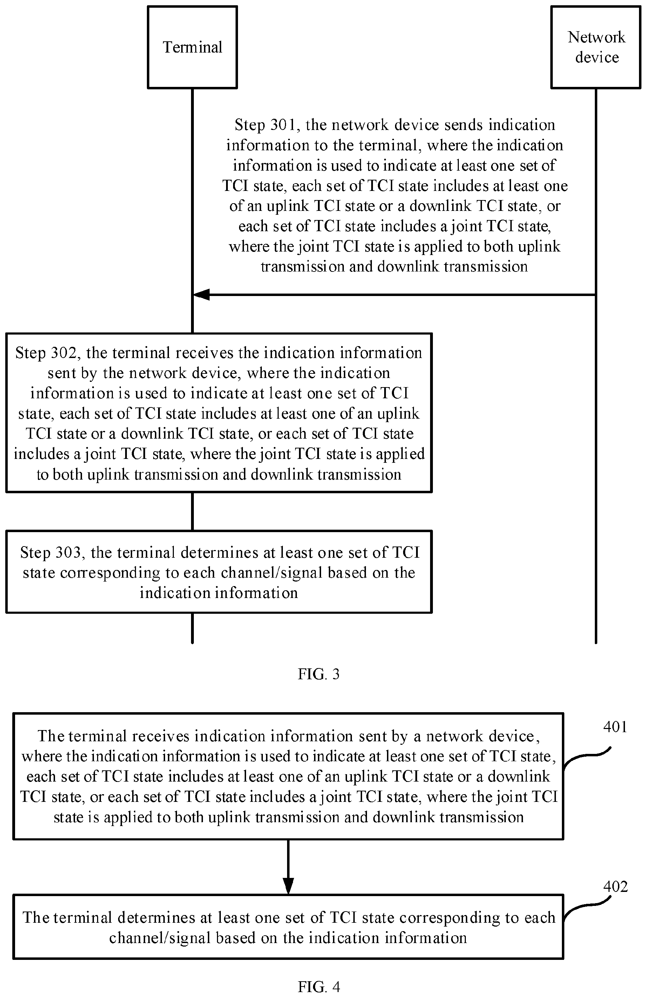

FIG. 3 shows a flow chart of a TCI state determination method according to an embodiment of the present disclosure, which, for example, may be applied to the terminal and the network device shown in FIG. 1. The method includes at least part of the following contents.

At step 301, the network device sends indication information to the terminal, where the indication information is used to indicate at least one set of TCI state, each set of TCI state includes at least one of an uplink TCI state or a downlink TCI state, or each set of TCI state includes a joint TCI state, where the joint TCI state is applied to both uplink transmission and downlink transmission.

At least one set of TCI state indicated by the indication information in the embodiment of the present disclosure is a unified TCI state for at least one channel/signal, which is also referred to as indicated TCI state. It may be appreciated that a set of TCI state may be used for transmissions of at least two kinds of the following channels/signals: PDCCH (Physical Downlink Control Channel), PDSCH (Physical Downlink Shared Channel), PUCCH (Physical Uplink Control Channel), PUSCH (Physical Uplink Shared Channel), SRS (Sounding Reference Signal), CSI-RS (Channel State Information Reference Signal).

In the embodiment of the present disclosure, the uplink TCI state is a separate UL TCI state (separate uplink TCI state), the downlink TCI state is a separate DL TCI state (separate downlink TCI state), and the joint TCI state is a joint TCI state.

At step 302, the terminal receives the indication information sent by the network device, where the indication information is used to indicate at least one set of TCI state, each set of TCI state includes at least one of an uplink TCI state or a downlink TCI state, or each set of TCI state includes a joint TCI state, where the joint TCI state is applied to both uplink transmission and downlink transmission.

In the embodiment of the present disclosure, the network device configures at least one set of TCI state for the terminal by means of indication information, and a TCI state included in each set of TCI state in the at least one set of TCI state may be different from a TCI state included in each other set of TCI state in the at least one set of TCI state.

Each set of TCI state includes at least one of an uplink TCI state or a downlink TCI state, or each set of TCI state includes a joint TCI state. It may also be appreciated that each set of TCI state in the embodiment of the present disclosure includes an uplink TCI state, or a downlink TCI state, or both an uplink TCI state and a downlink TCI state, or a joint TCI state.

That is to say, each set of TCI state includes any of the following situations:
(1) an uplink TCI state;
(2) a downlink TCI state;
(3) an uplink TCI state and a downlink TCI state;
(4) a joint TCI state. The joint TCI state is applied to uplink transmission and downlink transmission simultaneously. That is to say, the joint TCI state may indicate both a TCI state used for uplink transmission and a TCI state used for downlink transmission.

For example, the network device indicates three sets of TCI states by means of the indication information, namely TCI state 1, TCI state 2 and TCI state 3. The TCI state 1 includes the uplink TCI state and the downlink TCI state. The TCI state 2 includes the joint TCI state. The TCI state 3 includes the uplink TCI state.

In some embodiments, the network device is configured with two TRPs, namely a first TRP and a second TRP. If a joint TCI state is configured for the first TRP, a set of TCI state corresponding to the first TRP includes the joint TCI state; and if a separate uplink TCI and/or a separate downlink TCI is configured for the first TRP, the set of TCI state corresponding to the first TRP includes at least one of the separate uplink TCI or the separate downlink TCI. Similarly, if a joint TCI state is configured for the second TRP, a set of TCI state corresponding to the second TRP includes a joint TCI state; and if a separate uplink TCI and/or a separate downlink TCI is configured for the second TRP, the set of TCI state corresponding to the second TRP includes at least one of the separate uplink TCI or the separate downlink TCI.

At step 303, the terminal determines at least one set of TCI state corresponding to each channel/signal based on the indication information.

In the embodiment of the present disclosure, after receiving the indication information, the terminal may determine at least one set of TCI state indicated by the indication information. A channel/signal may also be transmitted between the terminal and the network device, and for the terminal, the terminal may determine at least one set of TCI state corresponding to each channel/signal based on the indication information.

In some embodiments, the network device is configured with multiple TRPs, and the network device transmits channels/signals to the terminal via the configured multiple TRPs. Each channel/signal needs to correspond to at least one set of TCI state, that is to say, the terminal needs to determine at least one set of TCI state corresponding to each channel/signal based on the indication information, that is, to determine at least one TRP corresponding to each channel/signal.

That is, in the embodiment of the present disclosure, a corresponding set of TCI state may be indicated for each TRP in multiple TRPs by means of the indication information, achieving the effect of indicating unified TCI state(s) through a single indication information in a multi-TRP scenario, and ensuring the signal quality of signals transmitted by multiple TRPs based on the unified TCI state(s).

It should be noted that the steps performed by the network device may form an embodiment alone, and the steps performed by the terminal may also form an embodiment alone, which are not limited in the present disclosure.

In the solution provided by the embodiment of the present disclosure, the terminal may determine at least one set of TCI state corresponding to each channel/signal based on the indication information, and each channel/signal is transmitted by TRP(s) of the network device, so at least one TRP corresponding to each channel/signal is also determined. Thus, a solution for determining a correspondence between a TCI state and a channel/signal is provided, and the terminal performs data transmission with a network device based on the determined TCI state, so as to ensure the quality of a transmitted signal, thereby ensuring the reliability of transmission.

Based on the embodiment shown in FIG. 3, the terminal determines the TCI state corresponding to each channel/signal based on the indication information in a variety of manners. How to determine the TCI state corresponding to each channel/signal will be described below.

In a first manner, the terminal determines at least one set of TCI state corresponding to a channel/signal based on a group identifier corresponding to a TCI state indicated by the indication information.

In some embodiments, the indication information indicates a group identifier corresponding to each set of TCI state, and the group identifier is an identifier of a group corresponding to the channel/signal.

In the embodiment of the present disclosure, after the terminal receives the indication information, since the indication information indicates at least one set of TCI state and the indication information also indicates the group identifier corresponding to each set of TCI state, the terminal also knows a group identifier corresponding to each channel/signal, so the terminal can determine a channel/signal indicated by the group identifier based on the group identifier. The terminal can further determine a channel/signal corresponding to each set of TCI state.

For example, the indication information indicates TCI state 1, TCI state 2, and TCI state 3. In addition, the indication information also indicates group identifier 1 corresponding to TCI state 1, group identifier 2 corresponding to TCI state 2, and group identifier 3 corresponding to TCI state 3.

Optionally, in a case where a number of the at least one set of TCI state is less than a number of groups corresponding to channels/signals, and the indication information is further used to indicate the group identifier corresponding to each set of TCI state.

That is to say, in the embodiment of the present disclosure, in a case where the number of the at least one set of TCI state is less than the number of groups corresponding to channels/signals, it means that multiple groups of channels/signals cannot correspond, in one-to-one manner, to the at least one set of TCI state indicated by the indication information. In this case, the indication information is used to indicate the group identifier corresponding to each set of TCI state, and the terminal may determine a set of TCI state corresponding to each channel/signal based on the indication information.

For example, the indication information is used to indicate TCI state 1, TCI state 2 and TCI state 3, and all channels/signals of the terminal may be divided into five groups, corresponding to different group identifiers. Then the indication information is also used to indicate group identifier 1 corresponding to TCI state 1, group identifier 3 corresponding to TCI state 2, and group identifier 5 corresponding to TCI state 3.

For another example, the indication information is used to indicate TCI state 1, and all channels/signals of the terminal may be divided into two groups, corresponding to different group identifiers. Then the indication information is also used to indicate group identifier 1 corresponding to TCI state 1.

It should be noted that the embodiment of the present disclosure is described by taking an example that the indication information indicates a group identifier corresponding to each set of TCI state. In another embodiment, the indication information is used to indicate a correspondence between TCI states and group identifiers, and the group identifier is an identifier of a group corresponding to a channel/signal.

In a second manner, the terminal determines at least one set of TCI state corresponding to the channel/signal based on the mapping relationship.

In some embodiments, the terminal determines at least one set of TCI state corresponding to a channel/signal indicated by each group identifier based on the mapping relationship, where the mapping relationship includes a correspondence between each group identifier and each set of TCI state.

In the embodiments of the present disclosure, after receiving the indication information, the terminal determines at least one set of TCI state indicated by the indication information. The terminal also stores the mapping relationship, and may determine at least one set of TCI state corresponding to each channel/signal based on the mapping relationship.

For example, it is determined in the mapping relationship that the first set of TCI state corresponds to group identifier 1, and the second set of TCI state corresponds to group identifier 2. That is, the first set of TCI state corresponds to a channel/signal of group identifier 1, and the second set of TCI state corresponds to a channel/signal of group identifier 2.

Optionally, in a case where a number of the at least one set of TCI state is equal to a number of groups corresponding to all channels/signals of the terminal, the at least one set of TCI state corresponding to the channel/signal indicated by each group identifier is determined based on the mapping relationship, where the number of at least one set of TCI state is an integer greater than 1.

That is, in the embodiments of the present disclosure, in the case where the number of at least one set of TCI state is equal to the number of groups corresponding to channels/signals, it means that all the channel/signal(s) can correspond, in one-to-one manner, to the at least one set of TCI state indicated by the indication information. In this case, at least one set of TCI state corresponding to each channel/signal may be determined based on the indication information and the mapping relationship.

For example, the at least one set of TCI state includes two sets of TCI states, or four sets of TCI states, or other numbers of TCI states, which are not limited in the embodiments of the present disclosure.

It should be noted that the embodiments of the present disclosure are described by only taking the group identifier as an example. For the group identifier, the group identifier may include at least one of the following:
(1) CORESETPoolIndex (pool index);
(2) a group identifier of CORESET (control resource set);
(3) a group identifier of PUCCH;
(4) a group identifier of PUSCH (Physical Uplink Shared Channel).

In some embodiments, for one channel/signal, at least one group identifier may be configured for the one channel/signal, and each group identifier corresponds to at least one set of TCI state. For example, if the channel is a PDCCH, a CORESET group identifier is configured for a CORESET corresponding to the PDCCH; if the channel is a PUCCH, a PUCCH group identifier is configured for the PUCCH; if the channel is a PUSCH, a PUSCH group identifier is configured for the PUSCH. Each group identifier corresponds to one set of TCI state, that is, one set of TCI state is configured for the channel/signal. It should be noted that the PUCCH group identifier, the PUSCH group identifier, and the CORESET group identifier in the embodiments of the present disclosure may all be CORESET group identifiers, that is, the CORESET group identifier is configured for PUCCH and PUSCH.

In some other embodiments, if the channel is a PDCCH, two CORESET group identifiers are configured for a CORESET corresponding to the PDCCH, and each CORESET group identifier corresponds to one set of TCI state, that is, two sets of TCI states are configured for a channel/signal. Alternatively, if the channel is a PUCCH, two PUCCH group identifiers are configured for the PUCCH, and each PUCCH group identifier corresponds to one set of TCI state, that is, two sets of TCI states are configured for a channel/signal. Alternatively, if the channel is a PUSCH, two PUSCH group identifiers are configured for the PUSCH, and each PUSCH group identifier corresponds to one set of TCI state, that is, two sets of TCI states are configured for a channel/signal. It should be noted that the PUCCH group identifier, the PUSCH group identifier, and the CORESET group identifier in the embodiments of the present disclosure may all be CORESET group identifiers, that is, the CORESET group identifier may be configured for PUCCH and PUSCH.

In some other embodiments, one group identifier may be configured for one kind of channel/signal, and two group identifiers may be configured for another kind of channel/signal. For example, one group identifier is configured for a CORESET corresponding to a PDCCH, and two group identifiers are configured for a PUCCH. There are other combinations, which will not be listed one by one herein.

In the solution provided by the embodiments of the present disclosure, the terminal can determine a channel/signal corresponding to each set of TCI state among at least one set of TCI state in different manners, which expands the method of determining a channel/signal corresponding to each TCI state. Each channel/signal is transmitted by TRP(s) of a network device, so the TRP(s) corresponding to each channel/signal is also determined. Thus, a solution for determining a correspondence between TCI states and channel/signals is provided, and the terminal performs data transmission with the network device based on the determined TCI state, so as to ensure the quality of a transmitted signal, thereby ensuring the reliability of transmission.

How to determine the channel/signal corresponding to each set of TCI state has been described in the above embodiments, and how to indicate at least one set of TCI state will be described below.

In a first manner, at least one set of TCI state is activated by means of the indication information.

The indication information includes first indication information, and the first indication information is used to activate at least one set of TCI state.

In an embodiment of the present disclosure, the first indication information is used to activate at least one set of TCI state. The activated at least one set of TCI state is the at least one set of TCI state indicated for the terminal in the present disclosure.

In some embodiments, the activated at least one set of TCI state is a TCI state corresponding to a code point of a TCI state indication field in a DCI (Downlink Control Information).

The DCI includes the TCI state indication field, the TCI state indication field includes a code point, and a corresponding TCI state is indicated via the code point.

In the embodiment of the present disclosure, the first indication information activates at least one set of TCI state, and the at least one set of TCI state serves as the at least one set of TCI state indicated by the first indication information. That is to say, the first indication information activates at least one set of TCI state corresponding to one code point in the TCI state indication field. Thus, no additional DCI signaling is required to indicate the code point corresponding to the TCI state field.

Optionally, the TCI state indication field includes a first number of bits, different values indicated by the first number of bits correspond to different code points, and each code point corresponds to at least one set of TCI state.

For example, the TCI state indication field includes 2 bits, and the 2 bits may include 00, 01, 10, and 11, that is, 2 bits may indicate 4 code points. The first indication information activates a TCI state corresponding to a first code point, where the TCI state corresponding to the first code point may be TCI state #1, or the TCI state corresponding to the first code point may be TCI state #2 and TCI state #3.

Optionally, the network device activates at least one set of TCI state for the terminal, and when receiving the first indication information, the terminal may determine the at least one set of TCI state activated by the first indication information.

In some embodiments, the first indication information is an MAC CE (Media Access Control Control Element). That is to say, the network device sends the MAC CE to the terminal, to activate and indicate the at least one set of TCI state by means of the MAC CE.

In the embodiment of the present disclosure, the MAC CE is used to activate at least one set of TCI state. The activated at least one set of TCI state is the at least one set of TCI state indicated for the terminal in the present disclosure.

In some embodiments, the activated at least one set of TCI state is a TCI state corresponding to a code point in the TCI state indication field in the DCI.

The DCI includes a TCI state indication field, the TCI state indication field may be used to indicate different code points, and corresponding TCI states are indicated by using the code points.

In the embodiment of the present disclosure, the MAC CE activates at least one set of TCI state, and the at least one set of TCI state serves as at least one set of TCI state indicated by the MAC CE. That is to say, the MAC CE activates at least one set of TCI state corresponding to a code point in the TCI state indication field. Thus, no additional DCI signaling is required to indicate the code point corresponding to the TCI state field.

Optionally, the TCI state indication field includes a first number of bits, different values indicated by the first number of bits correspond to different code points, and each code point corresponds to at least one set of TCI state.

Optionally, the network device activates at least one set of TCI state for the terminal, and upon receipt of an MAC CE, the terminal may determine at least one set of TCI state activated by the MAC CE.

In the solution provided by the embodiments of the present disclosure, at least one set of TCI state is directly activated by means of the indication information, and the activated at least one set of TCI state is the at least one set of TCI state indicated by the indication information for the terminal, so there is no need to use DCI signaling for indication, thereby saving signaling overhead. Furthermore, a solution for determining a correspondence between a TCI state and a channel/signal is provided, and then data transmission is performed with a network device based on the determined TCI state, so as to ensure the quality of a transmitted signal, thereby ensuring the reliability of transmission.

In a second manner, at least one set of TCI state corresponding to each of at least two code points is activated by means of the indication information, and then one code point is indicated.

The indication information includes second indication information and third indication information. The second indication information is used to activate TCI states corresponding to at least two code points of a TCI state indication field in a DCI, and each code point corresponds to at least one set of TCI state. The third indication information is used to indicate one code point.

The DCI includes a TCI state indication field, the TCI state indication field includes a code point, and a corresponding TCI state is indicated by using the code point.

In the embodiment of the present disclosure, the second indication information is used to activate at least two code points, and each code point corresponds to at least one set of TCI state, and in a case where the TCI states corresponding to at least two code points are activated, the third indication information is used to indicate one code point, the terminal may determine at least one set of TCI state corresponding to the one code point indicated by the third indication information as the at least one set of TCI state indicated by the indication information.

Optionally, the TCI state indication field includes a second number of bits, different values indicated by the second number of bits correspond to different code points, and each of the code points correspond to at least one set of TCI state.

For example, the TCI state indication field includes 3 bits, and the 3 bits may include 8 values, that is, 3 bits may indicate 8 code points. The second indication information is used to activate a TCI state corresponding to a second code point and a TCI state corresponding to a third code point, where the second code point corresponds to TCI state #1 and TCI state #2, and the third code point corresponds to TCI state #3. If a code point indicated by the third indication information is the second code point, it means that the indicated TCI states is TCI state #1 and TCI state #2.

In some embodiments, the second indication information is an MAC CE, and the third indication information is a DCI. That is to say, the network device sends an MAC CE to the terminal, to activate TCI states corresponding to at least two code points through the MAC CE, and then uses a DCI to indicate one code point.

The DCI includes a TCI state indication field, the TCI state indication field may indicate different code points, and corresponding TCI state(s) are indicated through the one code point.

In the embodiment of the present disclosure, TCI states corresponding to at least two code points are activated through the MAC CE, and then one code point is indicated through the DCI. The terminal may determine at least one set of TCI state corresponding to one code point indicated by the DCI as the at least one set of TCI state indicated by the indication information.

Optionally, the network device configures at least one set of TCI state corresponding to each code point for the terminal; when receiving at least two code points activated by the MAC CE, the terminal may determine at least one set of TCI state corresponding to each of the code points activated by the MAC CE; and the network device uses a DCI to indicate one code point of the activated at least two code points, that is, to indicate at least one set of TCI state corresponding to the one code point.

In the solution provided by the embodiments of the present disclosure, TCI states corresponding to at least two code points are activated through the second indication information, and then one code point of the activated code points is indicated through the third indication information, thereby improving the diversity of the indicated at least one set of TCI state. In addition, a solution for determining a correspondence between a TCI state and a channel/signal is provided, and then data transmission is performed with a network device based on the determined TCI state, so as to ensure the quality of a transmitted signal, thereby ensuring the reliability of transmission.

Based on the above embodiments, channels/signals in the embodiments of the present disclosure are in multiple types. The following describes the channels/signals involved in the present disclosure.

The channel/signal includes at least one of the following:
(1) a PDCCH (Physical Downlink Control Channel) transmitted based on a CORESET (control resource set);
(2) a PUCCH transmitted periodically;
(3) a PUCCH transmitted semi-persistently;
(4) a PUSCH of configured grant type 1.

The SS set (Search Space set) associated with the CORESET corresponding to the PDCCH in the embodiments of the present disclosure includes various situations.

In some embodiments, the SS set associated with CORESET corresponding to PDCCH includes USS sets (UE-specific Search Space set) and/or Type3-PDCCH CSS sets (Common Search Space set).

For example, the SS set associated with the CORESET corresponding to the PDCCH includes USS sets. Alternatively, the SS set associated with the CORESET corresponding to the PDCCH includes Type3-PDCCH CSS sets. Alternatively, the SS set associated with the CORESET corresponding to the PDCCH includes USS sets and Type3-PDCCH CSS sets.

In some other embodiments, the SS set associated with the CORESET corresponding to the PDCCH at least includes a CSS set other than Type3-PDCCH CSS sets, and a unified TCI state is used by the CORESET.

The unified TCI state is the at least one set of TCI state indicated by the network device through the indication information in the above embodiments.

Optionally, the network device configures a unified TCI state for the terminal, and configures the CORESET to use the unified TCI state.

In some other embodiments, the CORESET corresponding to the PDCCH is CORESET#0, and the unified TCI state is used by the CORESET.

Optionally, the network device configures the unified TCI state for the terminal, and configures the CORESET to use the unified TCI state.

It should be noted that if the channel/signal in the embodiment of the present disclosure is a PDCCH transmitted based on a CORESET, the terminal determines the downlink TCI state or the joint TCI state in at least one set of TCI state corresponding to each PDCCH based on the indication information.

That is to say, the terminal determines the downlink TCI state among the at least one set of TCI state corresponding to each PDCCH based on the indication information. Alternatively, the terminal determines the joint TCI state among the at least one set of TCI state corresponding to each PDCCH based on the indication information, and the joint TCI state corresponds to a TCI state for downlink transmission.

In some embodiments, the terminal determines the downlink TCI state or the joint TCI state as a TCI state of a PDSCH (Physical Downlink Shared Channel) or a CSI-RS (Channel State Information Reference Signal) scheduled by the PDCCH.

In the embodiment of the present disclosure, since a PDCCH can schedule a PDSCH or a CSI-RS, after determining the downlink TCI state or joint TCI state, the terminal uses the determined downlink TCI state or joint TCI state as the TCI state of the PDSCH or the TCI state of the CSI-RS.

If the channel/signal in the embodiment of the present disclosure is a PDCCH transmitted based on a CORESET, the terminal determines the uplink TCI state or the joint TCI state in at least one set of TCI state corresponding to each PDCCH based on the indication information.

That is to say, the terminal determines the uplink TCI state among at least one set of TCI state corresponding to each PDCCH based on the indication information. Alternatively, the terminal determines the joint TCI state among at least one set of TCI state corresponding to each PDCCH based on the indication information, and the joint TCI state corresponds to a TCI state for uplink transmission.

In some embodiments, the uplink TCI state or the joint TCI state is determined as a TCI state of a PUCCH, or a PUSCH, or an SRS scheduled by each PDCCH.

In the embodiment of the present disclosure, since a PDCCH may schedule a PUCCH or a PUSCH or an SRS (Sounding Reference Signal), after determining the uplink TCI state or the joint TCI state, the terminal uses the determined downlink TCI state or the determined joint TCI state as the TCI state of the PUCCH or the PUSCH or the SRS.

It should be noted that in the embodiment of the present disclosure, the network device may also configure a group identifier for the terminal through configuration information.

In some embodiments, the network device sends configuration information to the terminal, and the terminal receives the configuration information, where the configuration information is used to configure at least one group identifier for a channel/signal, and a set of TCI state corresponding to any group identifier is different from a set of TCI state corresponding to any other group identifier.

Optionally, if the channel/signal is a PDCCH transmitted based on a CORESET, the configuration information is used to configure one or more group identifiers for a certain CORESET of the terminal, and groups corresponding to multiple group identifiers correspond to different sets of TCI states. Alternatively, if the channel/signal is a PUCCH or a PUSCH, the configuration information is used to configure one or more group identifiers for a certain PUCCH resource or a certain PUSCH of the terminal, and groups corresponding to multiple group identifiers correspond to different sets of TCI states.

In the solution provided by the embodiment of the present disclosure, the network device configures at least one group identifier for each channel/signal, an identifier of a group corresponding to the channel/signal may be determined based on the group identifier, and at least one set of TCI state corresponding to each channel/signal may be determined based on at least one set of TCI state corresponding to each group identifier, which ensures the accuracy of at least one set of TCI state corresponding to each channel/signal, thereby ensuring the quality of transmitted signals, and thus ensuring the reliability of the transmission.

It should be noted that each of the above-mentioned embodiments can be split into new embodiments, or combined with another embodiment to form a new embodiment. The present disclosure does not limit the combination of embodiments.

FIG. 4 shows a flow chart of a TCI state determination method according to an embodiment of the present disclosure, which, for example, may be applied to the terminal shown in FIG. 1. The method includes at least part of the following contents.

At step 401, the terminal receives indication information sent by a network device, where the indication information is used to indicate at least one set of TCI state, each set of TCI state includes at least one of an uplink TCI state or a downlink TCI state, or each set of TCI state includes a joint TCI state, where the joint TCI state is applied to both uplink transmission and downlink transmission.

The at least one set of TCI state indicated by the indication information in the embodiment of the present disclosure is a unified TCI state used for at least one channel/signal, which is also referred to as an indicated TCI state. It may be appreciated that one set of TCI state may be used for transmissions of at least two kinds of channels/signals of PDCCH, PDSCH, PUCCH, PUSCH, SRS and CSI-RS.

In the embodiment of the present disclosure, the uplink TCI state is a separate UL TCI state (separate uplink TCI state), the downlink TCI state is a separate DL TCI state (separate downlink TCI state), and the joint TCI state is a joint TCI state.

In the embodiment of the present disclosure, the network device configures at least one set of TCI state for the terminal by means of the indication information, and a TCI state included in each set of TCI state in the at least one set of TCI state may be different from a TCI state included in each another set of TCI state in the at least one set of TCI state.

Each set of TCI state includes at least one of an uplink TCI state or a downlink TCI state, or each set of TCI state includes a joint TCI state. It may also be appreciated that each set of TCI state in the embodiment of the present disclosure includes an uplink TCI state, or a downlink TCI state, or both an uplink TCI state and a downlink TCI state, or a joint TCI state.

That is to say, each set of TCI state includes any of the following situations:
(1) an uplink TCI state;
(2) a downlink TCI state;
(3) an uplink TCI state and a downlink TCI state;
(4) a joint TCI state. The joint TCI state is applied to uplink transmission and downlink transmission simultaneously. That is to say, the joint TCI state may indicate both a TCI state used for uplink transmission and a TCI state used for downlink transmission.

For example, the network device indicates three sets of TCI states by means of the indication information, namely TCI state 1, TCI state 2 and TCI state 3. The TCI state 1 includes the uplink TCI state and the downlink TCI state. The TCI state 2 includes the joint TCI state. The TCI state 3 includes the uplink TCI state.

In some embodiments, the network device is configured with two TRPs, namely a first TRP and a second TRP. If a joint TCI state is configured for the first TRP, a set of TCI state corresponding to the first TRP includes the joint TCI state; and if a separate uplink TCI and/or a separate downlink TCI is configured for the first TRP, the set of TCI state corresponding to the first TRP includes at least one of the separate uplink TCI or the separate downlink TCI. Similarly, if a joint TCI state is configured for the second TRP, a set of TCI state corresponding to the second TRP includes a joint TCI state; and if a separate uplink TCI and/or a separate downlink TCI is configured for the second TRP, the set of TCI state corresponding to the second TRP includes at least one of the separate uplink TCI or the separate downlink TCI.

At step 402, the terminal determines at least one set of TCI state corresponding to each channel/signal based on the indication information.

In the embodiment of the present disclosure, after receiving the indication information, the terminal may determine at least one set of TCI state indicated by the indication information. A channel/signal may also be transmitted between the terminal and the network device, and for the terminal, the terminal may determine at least one set of TCI state corresponding to each channel/signal based on the indication information.

In some embodiments, the network device is configured with multiple TRPs, and the network device transmits channels/signals to the terminal via the configured multiple TRPs. Each channel/signal needs to correspond to at least one set of TCI state, that is to say, the terminal needs to determine at least one set of TCI state corresponding to each channel/signal based on the indication information, that is, to determine at least one TRP corresponding to each channel/signal.

That is, in the embodiment of the present disclosure, a corresponding set of TCI state may be indicated for each TRP in multiple TRPs by means of the indication information, achieving the effect of indicating unified TCI state(s) through a single indication information in a multi-TRP scenario, and ensuring the signal quality of signals transmitted by multiple TRPs based on the unified TCI state(s).

In the solution provided by the embodiment of the present disclosure, the terminal may determine at least one set of TCI state corresponding to each channel/signal based on the indication information, and each channel/signal is transmitted by TRP(s) of the network device, so at least one TRP(s) corresponding to each channel/signal is also determined. Thus, a solution for determining a correspondence between a TCI state and a channel/signal is provided, and then data transmission is performed with a network device based on the determined TCI state, so as to ensure the quality of a transmitted signal, thereby ensuring the reliability of transmission.

Based on the embodiments shown in FIG. 4, the terminal determines the TCI state corresponding to each channel/signal based on the indication information in a variety of manners. How to determine the TCI state corresponding to each channel/signal will be described below.

In a first manner, the terminal determines at least one set of TCI state corresponding to a channel/signal based on a group identifier corresponding to a TCI state indicated by the indication information.

In some embodiments, the indication information indicates a group identifier corresponding to each set of TCI state, and the group identifier is an identifier of a group corresponding to the channel/signal.

In the embodiment of the present disclosure, the indication information indicates at least one set of TCI state, and the indication information also indicates a group identifier corresponding to each set of TCI state. The terminal also knows the group identifier corresponding to each channel/signal, so a channel/signal indicated by the group identifier may be determined based on the group identifier. Thus, the terminal may determine a channel/signal corresponding to each set of TCI state after receiving the indication information.

For example, the indication information indicates TCI state 1, TCI state 2, and TCI state 3. In addition, the indication information also indicates group identifier 1 corresponding to TCI state 1, group identifier 2 corresponding to TCI state 2, and group identifier 3 corresponding to TCI state 3.

Optionally, in a case where a number of the at least one set of TCI state is less than a number of groups corresponding to channels/signals, and the indication information is further used to indicate the group identifier corresponding to each set of TCI state.

That is to say, in the embodiment of the present disclosure, in a case where the number of the at least one set of TCI state is less than the number of groups corresponding to channels/signals, it means that all the groups of channels/signals cannot correspond, in one-to-one manner, to the at least one set of TCI state indicated by the indication information. In this case, the indication information is used to indicate a group identifier corresponding to each set of TCI state, and the terminal may determine a set of TCI state corresponding to each channel/signal based on the indication information.

For example, the indication information is used to indicate TCI state 1, TCI state 2 and TCI state 3, and all channels/signals of the terminal may be divided into five groups, corresponding to different group identifiers. In this case, the indication information is also used to indicate group identifier 1 corresponding to TCI state 1, group identifier 3 corresponding to TCI state 2, and group identifier 5 corresponding to TCI state 3.

For another example, the indication information is used to indicate TCI state 1, and all channels/signals of the terminal may be divided into two groups, corresponding to different group identifiers. The indication information is also used to indicate group identifier 1 corresponding to TCI state 1.

It should be noted that the embodiment of the present disclosure is described by taking an example that the indication information indicates a group identifier corresponding to each set of TCI state. In another embodiment, the indication information is used to indicate a correspondence between TCI states and group identifiers, and the group identifier is an identifier of a group corresponding to a channel/signal.

In a second manner, the terminal determines at least one set of TCI state corresponding to the channel/signal based on the mapping relationship.

In some embodiments, the terminal determines at least one set of TCI state corresponding to the channel/signal indicated by each group identifier based on the mapping relationship, where the mapping relationship includes a correspondence between multiple group identifiers and multiple sets of TCI states.

In the embodiments of the present disclosure, after receiving the indication information, the terminal determines at least one set of TCI state indicated by the indication information. The terminal also stores a mapping relationship, and the terminal may determine at least one set of TCI state corresponding to each channel/signal based on the mapping relationship.

For example, it is determined in the mapping relationship that the first set of TCI state corresponds to group identifier 1, and the second set of TCI state corresponds to group identifier 2. That is, the first set of TCI state corresponds to a channel/signal of group identifier 1, and the second set of TCI state corresponds to a channel/signal of group identifier 2.

Optionally, in a case where a number of the at least one set of TCI state is equal to a number of groups corresponding to all channels/signals of the terminal, the at least one set of TCI state corresponding to the channel/signal indicated by each group identifier is determined based on the mapping relationship, where the number of at least one set of TCI state is an integer greater than 1.

That is, in the embodiments of the present disclosure, in the case where the number of at least one set of TCI state is equal to the number of groups corresponding to channels/signals, it means that all the channel/signal(s) can correspond, in one-to-one manner, to the at least one set of TCI state indicated by the indication information. In this case, at least one set of TCI state corresponding to each channel/signal may be determined based on the indication information and the mapping relationship.

For example, the at least one set of TCI state includes two sets of TCI states, or four sets of TCI states, or other numbers of TCI states, which are not limited in the embodiments of the present disclosure.

It should be noted that the embodiment of the present disclosure is described by only taking the group identifier as an example. For the group identifier, the group identifier may include at least one of the following:
(1) CORESETPoolIndex (pool index);
(2) a group identifier of CORESET;
(3) a group identifier of PUCCH (Physical Uplink Control Channel);
(4) a group identifier of PUSCH (Physical Uplink Shared Channel).

In some embodiments, for one channel/signal, at least one group identifier may be configured for the one channel/signal, and each group identifier corresponds to at least one set of TCI state. For example, if the channel is a PDCCH, a CORESET group identifier is configured for a CORESET corresponding to the PDCCH; if the channel is a PUCCH, a PUCCH group identifier is configured for the PUCCH; if the channel is a PUSCH, a PUSCH group identifier is configured for the PUSCH. Each group identifier corresponds to one set of TCI state, that is, one set of TCI state is configured for the channel/signal. It should be noted that the PUCCH group identifier, the PUSCH group identifier, and the CORESET group identifier in the embodiments of the present disclosure may all be CORESET group identifiers, that is, the CORESET group identifier is configured for PUCCH and PUSCH.

In some other embodiments, if the channel is a PDCCH, two CORESET group identifiers are configured for a CORESET corresponding to the PDCCH, and each of the CORESET group identifiers corresponds to one set of TCI state, that is, two sets of TCI states are configured for the channel/signal. Alternatively, if the channel is a PUCCH, two PUCCH group identifiers are configured for the PUCCH, and each of the PUCCH group identifiers corresponds to one set of TCI state, that is, two sets of TCI states are configured for the channel/signal. Alternatively, if the channel is a PUSCH, two PUSCH group identifiers are configured for the PUSCH, and each PUSCH group identifier corresponds to one set of TCI state, that is, two sets of TCI states are configured for the channel/signal. It should be noted that the PUCCH group identifier, the PUSCH group identifier, and the CORESET group identifier in the embodiments of the present disclosure may all be CORESET group identifiers, that is, the CORESET group identifier may be configured for PUCCH and PUSCH.

In some embodiments, one group identifier may be configured for one kind of channel/signal, and two group identifiers may be configured for another kind of channel/signal. For example, one group identifier is configured for a CORESET corresponding to a PDCCH, and two group identifiers are configured for a PUCCH. There are other combinations, which will not be listed one by one herein.

In the solution provided by the embodiments of the present disclosure, the terminal can determine a channel/signal corresponding to each set of TCI state among at least one set of TCI state in different manners, which expands the method of determining a channel/signal corresponding to each TCI state. Each channel/signal is transmitted by TRP(s) of a network device, so the TRP(s) corresponding to each channel/signal is also determined. Thus, a solution for determining a correspondence between TCI states and channel/signals is provided, and the terminal performs data transmission with the network device based on the determined TCI state, so as to ensure the quality of a transmitted signal, thereby ensuring the reliability of transmission.

Further, how to indicate at least one set of TCI state will be described below.

In a first manner, at least one set of TCI state is activated by means of the indication information.

The indication information includes first indication information, and the first indication information is used to activate at least one set of TCI state.

In an embodiment of the present disclosure, the first indication information is used to activate at least one set of TCI state. The activated at least one set of TCI state is the at least one set of TCI state indicated for the terminal in the present disclosure.

In some embodiments, the activated at least one set of TCI state is a TCI state corresponding to a code point of a TCI state indication field in a DCI (Downlink Control Information).

The DCI includes the TCI state indication field, the TCI state indication field includes a code point, and the code point indicates a corresponding TCI state.

In the embodiment of the present disclosure, the first indication information activates at least one set of TCI state, and the at least one set of TCI state serves as the at least one set of TCI state indicated by the first indication information. That is to say, the first indication information activates at least one set of TCI state corresponding to one code point in the TCI state indication field. Thus, no additional DCI signaling is required to indicate the code point corresponding to the TCI state field.

Optionally, the TCI state indication field includes a first number of bits, different values indicated by the first number of bits correspond to different code points, and each code point corresponds to at least one set of TCI state.

For example, the TCI state indication field includes 2 bits, and the 2 bits may include 00, 01, 10, and 11, that is, 2 bits may indicate 4 code points. The code point activated by the first indication information is a TCI state corresponding to a first code point, where the TCI state corresponding to the first code point may be TCI state #1, or the TCI state corresponding to the first code point may be TCI state #2 and TCI state #3.

Optionally, the network device activates at least one set of TCI state for the terminal, and when receiving the first indication information, the terminal may determine the at least one set of TCI state activated by the first indication information.

In some embodiments, the first indication information is an MAC CE (Media Access Control Control Element). That is to say, the network device sends the MAC CE to the terminal, to activate and indicate the at least one set of TCI state by means of the MAC CE.

In the embodiment of the present disclosure, the MAC CE is used to activate at least one set of TCI state. The activated at least one set of TCI state is the at least one set of TCI state indicated for the terminal in the present disclosure.

In some embodiments, the activated at least one set of TCI state is a TCI state corresponding to a code point in the TCI state indication field in the DCI.

The DCI includes a TCI state indication field, the TCI state indication field may be used to indicate different code points, and corresponding TCI states are indicated via the code points.

In the embodiment of the present disclosure, the MAC CE activates at least one set of TCI state, and the at least one set of TCI state serves as at least one set of TCI state indicated by the MAC CE. That is to say, the MAC CE activates at least one set of TCI state corresponding to a code point in the TCI state indication field. Thus, no additional DCI signaling is required to indicate the code point corresponding to the TCI state field.

Optionally, the TCI state indication field includes a first number of bits, different values indicated by the first number of bits correspond to different code points, and each code point corresponds to at least one set of TCI state.

Optionally, the network device activates at least one set of TCI state for the terminal, and upon receipt of an MAC CE, the terminal may determine at least one set of TCI state activated by the MAC CE.

In the solution provided by the embodiments of the present disclosure, at least one set of TCI state is directly activated by means of the indication information, and the activated at least one set of TCI state is the at least one set of TCI state indicated by the indication information for the terminal, so there is no need to use DCI signaling for indication, thereby saving signaling overhead. Furthermore, a solution for determining a correspondence between a TCI state and a channel/signal is provided, and data transmission is performed with a network device based on the determined TCI state, so as to ensure the quality of a transmitted signal, thereby ensuring the reliability of transmission.

In a second manner, at least one set of TCI state corresponding to each of at least two code points is activated by means of the indication information, and one code point is indicated.

The indication information includes second indication information and third indication information. The second indication information is used to activate TCI states corresponding to at least two code points of a TCI state indication field in a DCI, and each code point corresponds to at least one set of TCI state. The third indication information is used to indicate one code point.

The DCI includes a TCI state indication field, the TCI state indication field includes a code point, and a corresponding TCI state is indicated by using the code point.

In the embodiment of the present disclosure, the second indication information is used to activate at least two code points, and each code point corresponds to at least one set of TCI state. In a case where TCI states corresponding to at least two code points are activated, when the third indication information is used to indicate one code point, the terminal may determine at least one set of TCI state corresponding to the one code point indicated by the third indication information as the at least one set of TCI state indicated by the indication information.

Optionally, the TCI state indication field includes a second number of bits, different values indicated by the second number of bits correspond to different code points, and each of the code points correspond to at least one set of TCI state.

For example, the TCI state indication field includes 3 bits, and the 3 bits may include 8 values, that is, 3 bits may indicate 8 code points. The second indication information is used to activate a TCI state corresponding to a second code point and a TCI state corresponding to a third code point, where the second code point corresponds to TCI state #1 and TCI state #2, and the third code point corresponds to TCI state #3. If a code point indicated by the third indication information is the second code point, it means that the indicated TCI state(s) is TCI state #1 and TCI state #2.

In some embodiments, the second indication information is an MAC CE, and the third indication information is a DCI. That is to say, the network device sends an MAC CE to the terminal, to activate TCI states corresponding to at least two code points through the MAC CE, and then uses a DCI to indicate one code point.

The DCI includes a TCI state indication field, the TCI state indication field may indicate different code points, and corresponding TCI state(s) are indicated through the one code point.

In the embodiment of the present disclosure, TCI states corresponding to at least two code points are activated through the MAC CE, and then one code point is indicated through the DCI. The terminal may determine at least one set of TCI state corresponding to the one code point indicated by the DCI as the at least one set of TCI state indicated by the indication information.

Optionally, the network device configures at least one set of TCI state corresponding to each code point for the terminal; when receiving at least two code points activated by an MAC CE, the terminal may determine at least one set of TCI state corresponding to each of the code points activated by the MAC CE; and the network device further uses a DCI to indicate one code point of the activated at least two code points, that is, to indicate at least one set of TCI state corresponding to the one code point.

In the solution provided by the embodiments of the present disclosure, TCI states corresponding to at least two code points are activated through the second indication information, and then one code point of the activated at least two code points is indicated through the third indication information, thereby improving the diversity of the indicated at least one set of TCI state. In addition, a solution for determining a correspondence between a TCI state and a channel/signal is provided, and data transmission is performed with a network device based on the determined TCI state, so as to ensure the quality of a transmitted signal, thereby ensuring the reliability of transmission.

In some embodiments, the channel/signal includes at least one of the following:
(1) a PDCCH transmitted based on a CORESET (control resource set);
(2) a PUCCH transmitted periodically;
(3) a PUCCH transmitted semi-persistently;
(4) a PUSCH of configured grant type 1.

The SS set (Search Space set) associated with the CORESET corresponding to the PDCCH in the embodiments of the present disclosure includes various situations.

In some embodiments, the SS set associated with the CORESET corresponding to the PDCCH includes USS sets (UE-specific Search Space set) and/or Type3-PDCCH CSS sets (Common Search Space set).

In some other embodiments, an SS set associated with the CORESET corresponding to the PDCCH at least includes a CSS set other than Type3-PDCCH CSS sets, and a unified TCI state is used for the CORESET.

The unified TCI state is the at least one set of TCI state indicated by the network device by means of the indication information in the above embodiments.

Optionally, the network device configures a unified TCI state for the terminal, and configures the CORESET to use the unified TCI state.

In some other embodiments, the CORESET corresponding to the PDCCH is CORESET#0, and the unified TCI state is used for the CORESET.

Optionally, the network device configures the unified TCI state for the terminal, and configures the CORESET to use the unified TCI state.

It should be noted that if the channel/signal in the embodiment of the present disclosure is a PDCCH transmitted based on a CORESET, the terminal determines the downlink TCI state or the joint TCI state in at least one set of TCI state corresponding to each PDCCH based on the indication information.

That is to say, the terminal determines the downlink TCI state among the at least one set of TCI state corresponding to each PDCCH based on the indication information. Alternatively, the terminal determines the joint TCI state among the at least one set of TCI state corresponding to each PDCCH based on the indication information, and the joint TCI state corresponds to a TCI state for downlink transmission.

In some embodiments, the terminal determines the downlink TCI state or the joint TCI state as a TCI state of a PDSCH or a CSI-RS scheduled by the PDCCH.

In the embodiment of the present disclosure, since a PDCCH can schedule a PDSCH or a CSI-RS, after determining the downlink TCI state or joint TCI state, the terminal uses the determined downlink TCI state or the determined joint TCI state as the TCI state of the PDSCH or the TCI state of the CSI-RS.

If the channel/signal in the embodiment of the present disclosure is a PDCCH transmitted based on a CORESET, the terminal determines the uplink TCI state or the joint TCI state in at least one set of TCI state corresponding to each PDCCH based on the indication information.

That is to say, the terminal determines the uplink TCI state among at least one set of TCI state corresponding to each PDCCH based on the indication information. Alternatively, the terminal determines the joint TCI state among at least one set of TCI state corresponding to each PDCCH based on the indication information, and the joint TCI state corresponds to a TCI state for uplink transmission.

In some embodiments, the uplink TCI state or the joint TCI state is determined as a TCI state of a PUCCH, or a PUSCH, or an SRS scheduled by each PDCCH.

In the embodiment of the present disclosure, since a PDCCH can schedule a PUCCH or a PUSCH or an SRS, after determining the uplink TCI state or the joint TCI state, the terminal uses the determined downlink TCI state or the determined joint TCI state as the TCI state of the PUCCH or the PUSCH or the SRS.

It should be noted that in the embodiment of the present disclosure, the network device may also configure a group identifier for the terminal through configuration information.

In some embodiments, the network device sends configuration information to the terminal, and the terminal receives the configuration information, where the configuration information is used to configure at least one group identifier for a channel/signal, and each group identifier corresponds to a unique set of TCI state.

Optionally, if the channel/signal is a PDCCH transmitted based on a CORESET, the configuration information is used to configure one or more group identifiers for a certain CORESET of the terminal, and groups corresponding to multiple group identifiers correspond to different sets of TCI states. Alternatively, if the channel/signal is a PUCCH or a PUSCH, the configuration information is used to configure one or more group identifiers for a certain PUCCH resource or a certain PUSCH of the terminal, and groups corresponding to multiple group identifiers correspond to different sets of TCI states.

In the solution provided by the embodiment of the present disclosure, the network device configures at least one group identifier for each channel/signal, an identifier of a group corresponding to the channel/signal may be determined based on the group identifier, and at least one set of TCI state corresponding to each channel/signal may be determined based on at least one set of TCI state corresponding to the group identifier, which ensures the accuracy of at least one set of TCI state corresponding to each channel/signal, thereby ensuring the quality of transmitted signals, and thus ensuring the reliability of the transmission.

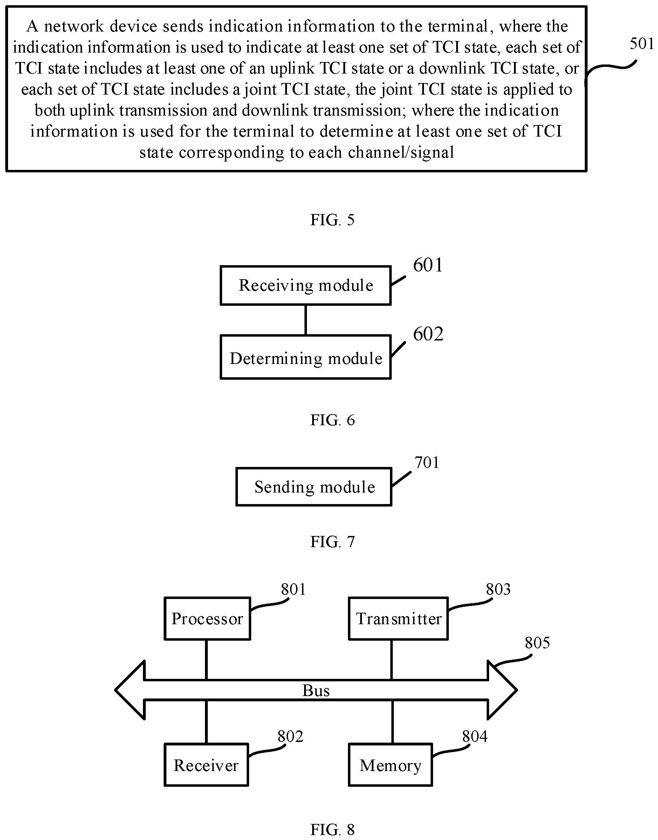

FIG. 5 shows a flow chart of a TCI state determination method according to an embodiment of the present disclosure. The exemplary method may be applied to the network device shown in FIG. 1. The method includes at least part of the following contents.

At step 501, the network device sends indication information to the terminal, where the indication information is used to indicate at least one set of TCI state, each set of TCI state includes at least one of an uplink TCI state or a downlink TCI state, or each set of TCI state includes a joint TCI state, the joint TCI state is applied to both uplink transmission and downlink transmission; where the indication information is used for the terminal to determine at least one set of TCI state corresponding to each channel/signal.

At least one set of TCI state indicated by the indication information in the embodiment of the present disclosure is a unified TCI state used for at least one channel/signal, which is also referred to as an indicated TCI state. It may be appreciated that one set of TCI state may be used for transmissions of at least two kinds of channels/signals of PDCCH, PDSCH, PUCCH, PUSCH, SRS and CSI-RS.

In the embodiment of the present disclosure, the uplink TCI state is a separate UL TCI state (separate uplink TCI state), the downlink TCI state is a separate DL TCI state (separate downlink TCI state), and the joint TCI state is a joint TCI state.

In the embodiment of the present disclosure, the network device configures at least one set of TCI state for the terminal by means of the indication information, and a TCI state included in each set of TCI state in the at least one set of TCI state may be different from a TCI state included in each another set of TCI state in the at least one set of TCI state.

Each set of TCI state includes at least one of an uplink TCI state or a downlink TCI state, or each set of TCI state includes a joint TCI state. It may also be appreciated that each set of TCI state in the embodiment of the present disclosure includes an uplink TCI state, or a downlink TCI state, or both an uplink TCI state and a downlink TCI state, or a joint TCI state.

That is to say, each set of TCI state includes any of the following situations:
(1) an uplink TCI state;
(2) a downlink TCI state;
(3) an uplink TCI state and a downlink TCI state;
(4) a joint TCI state. The joint TCI state is applied to the uplink transmission and the downlink transmission simultaneously. That is to say, the joint TCI state may indicate both a TCI state used for uplink transmission and a TCI state used for downlink transmission.

For example, the network device indicates three sets of TCI states by means of the indication information, namely TCI state 1, TCI state 2 and TCI state 3. The TCI state 1 includes the uplink TCI state and the downlink TCI state. The TCI state 2 includes the joint TCI state. The TCI state 3 includes the uplink TCI state.

In some embodiments, the network device is configured with two TRPs, namely a first TRP and a second TRP. If a joint TCI state is configured for the first TRP, a set of TCI state corresponding to the first TRP includes the joint TCI state; and if a separate uplink TCI and/or a separate downlink TCI is configured for the first TRP, the set of TCI state corresponding to the first TRP includes at least one of the separate uplink TCI or the separate downlink TCI. Similarly, if a joint TCI state is configured for the second TRP, a set of TCI state corresponding to the second TRP includes a joint TCI state; and if a separate uplink TCI and/or a separate downlink TCI is configured for the second TRP, the set of TCI state corresponding to the second TRP includes at least one of the separate uplink TCI or the separate downlink TCI.

In some embodiments, the network device is configured with multiple TRPs, and the network device transmits channels/signals to the terminal via the configured multiple TRPs. Each channel/signal needs to correspond to at least one set of TCI state, that is to say, the terminal needs to determine at least one set of TCI state corresponding to each channel/signal based on the indication information, that is, to determine at least one TRP corresponding to each channel/signal.

That is to say, the embodiment of the present disclosure may indicate corresponding sets of TCI state for all the multiple TRPs by means of the indication information, achieving the effect of indicating unified TCI states through a single indication information in a multi-TRP scenario, and ensuring the signal quality of signals transmitted by multiple TRPs based on the unified TCI states.

In the solution provided by the embodiment of the present disclosure, the terminal can determine each channel/signal based on the indication information, and at least one set of TCI state corresponding to each channel/signal, and can also determine at least one TRP corresponding to the channel/signal, because each channel/signal is transmitted by TRP(s) of the network device. Thus, a solution for determining a correspondence between a TCI state and a channel/signal is provided, and the terminal can perform data transmission with a network device based on the determined TCI state, so as to ensure the quality of a transmitted signal, thereby ensuring the reliability of transmission.

Based on the embodiment shown in FIG. 5, the indication information is used for the terminal to determine TCI state(s) corresponding to each channel/signal, and how to determine the TCI state(s) corresponding to each channel/signal will be described below.

In a first manner, indication information is used to indicate the group identifier corresponding to the TCI state.

In some embodiments, the indication information is used to indicate a group identifier corresponding to each set of TCI state, and the group identifier is an identifier of a group corresponding to the channel/signal.

In the embodiment of the present disclosure, the indication information indicates at least one set of TCI state, and the indication information also indicates the group identifier corresponding to each set of TCI state. The terminal also knows a group identifier corresponding to each channel/signal, so the terminal can determine a channel/signal indicated by the group identifier based on the group identifier. After receiving the indication information, the terminal can further determine a channel/signal corresponding to each set of TCI state.

For example, the indication information indicates TCI state 1, TCI state 2, and TCI state 3. In addition, the indication information also indicates group identifier 1 corresponding to TCI state 1, group identifier 2 corresponding to TCI state 2, and group identifier 3 corresponding to TCI state 3.

Optionally, in a case where a number of the at least one set of TCI state is less than a number of groups corresponding to channels/signals, and the indication information is further used to indicate the group identifier corresponding to each set of TCI state.

That is to say, in the embodiment of the present disclosure, in a case where the number of the at least one set of TCI state is less than the number of groups corresponding to channels/signals, it means that multiple groups of channels/signals cannot correspond, in one-to-one manner, to the at least one set of TCI state indicated by the indication information. In this case, the indication information is used to indicate the group identifier corresponding to each set of TCI state, and the terminal may determine a set of TCI state corresponding to each channel/signal based on the indication information.

For example, the indication information is used to indicate TCI state 1, TCI state 2 and TCI state 3, and all channels/signals of the terminal may be divided into five groups, corresponding to different group identifiers. Then the indication information is also used to indicate group identifier 1 corresponding to TCI state 1, group identifier 3 corresponding to TCI state 2, and group identifier 5 corresponding to TCI state 3.

For another example, the indication information is used to indicate TCI state 1, and all channels/signals of the terminal may be divided into two groups, corresponding to different group identifiers. In this case, the indication information is also used to indicate group identifier 1 corresponding to TCI state 1.

It should be noted that the embodiment of the present disclosure is described by taking an example that the indication information indicates a group identifier corresponding to each set of TCI state. In another embodiment, the indication information is used to indicate a correspondence between the TCI state and the group identifier, and the group identifier is an identifier of a group corresponding to a channel/signal.

In a second manner, at least one set of TCI state corresponding to the channel/signal is determined based on the mapping relationship.

In some embodiments, the indication information is used for the terminal to determine at least one set of TCI state corresponding to a channel/signal indicated by each group identifier based on the mapping relationship, where the mapping relationship includes a correspondence between each group identifier and each set of TCI state.

In the embodiments of the present disclosure, after receiving the indication information, the terminal determines at least one set of TCI state indicated by the indication information. The terminal also stores the mapping relationship, and the terminal may determine at least one set of TCI state corresponding to each channel/signal based on the mapping relationship.

For example, it is determined in the mapping relationship that the first set of TCI state corresponds to group identifier 1, and the second set of TCI state corresponds to group identifier 2. That is, the first set of TCI state corresponds to a channel/signal of group identifier 1, and the second set of TCI state corresponds to a channel/signal of group identifier 2.

Optionally, in a case where a number of the at least one set of TCI state is equal to a number of groups corresponding to all channels/signals of the terminal, the indication information is used for the terminal to determine at least one set of TCI state corresponding to the channel/signal indicated by each group identifier based on the mapping relationship, where the number of at least one set of TCI state is an integer greater than 1.

That is, in the embodiments of the present disclosure, in the case where the number of at least one set of TCI state is equal to the number of groups corresponding to channels/signals, it means that all the channel/signal(s) can correspond, in one-to-one manner, to the at least one set of TCI state indicated by the indication information. In this case, one set of TCI state corresponding to each channel/signal may be determined based on the indication information and the mapping relationship.

For example, the at least one set of TCI state includes two sets of TCI states, or four sets of TCI states, or other numbers of TCI states, which are not limited in the embodiments of the present disclosure.

It should be noted that the embodiment of the present disclosure is described by only taking the group identifier as an example. For the group identifier, the group identifier may include at least one of the following:
(1) CORESETPoolIndex (pool index);
(2) a group identifier of CORESET;
(3) a group identifier of PUCCH;
(4) a group identifier of PUSCH.

In some embodiments, for one channel/signal, at least one group identifier may be configured for the one channel/signal, and each group identifier corresponds to at least one set of TCI state. For example, if the channel is a PDCCH, a CORESET group identifier is configured for a CORESET corresponding to the PDCCH; if the channel is a PUCCH, a PUCCH group identifier is configured for the PUCCH; if the channel is a PUSCH, a PUSCH group identifier is configured for the PUSCH. Each group identifier corresponds to one set of TCI state, that is, one set of TCI state is configured for the channel/signal. It should be noted that the PUCCH group identifier, the PUSCH group identifier, and the CORESET group identifier in the embodiments of the present disclosure may all be CORESET group identifiers, that is, the CORESET group identifier is configured for PUCCH and PUSCH.

In some other embodiments, if the channel is a PDCCH, two CORESET group identifiers are configured for a CORESET corresponding to the PDCCH, and each CORESET group identifier corresponds to one set of TCI state, that is, two sets of TCI states are configured for a channel/signal. Alternatively, if the channel is a PUCCH, two PUCCH group identifiers are configured for the PUCCH, and each PUCCH group identifier corresponds to one set of TCI state, that is, two sets of TCI states are configured for a channel/signal. Alternatively, if the channel is a PUSCH, two PUSCH group identifiers are configured for the PUSCH, and each PUSCH group identifier corresponds to one set of TCI state, that is, two sets of TCI states are configured for a channel/signal. It should be noted that the PUCCH group identifier, the PUSCH group identifier, and the CORESET group identifier in the embodiments of the present disclosure may all be CORESET group identifiers, that is, the CORESET group identifier may be configured for PUCCH and PUSCH.

In some other embodiments, one group identifier may be configured for one kind of channel/signal, and two group identifiers may be configured for another kind of channel/signal. For example, one group identifier is configured for a CORESET corresponding to a PDCCH, and two group identifiers are configured for a PUCCH. There are other combinations, which will not be listed one by one herein.

In the solution provided by the embodiments of the present disclosure, the terminal can determine a channel/signal corresponding to each set of TCI state among at least one set of TCI state in different manners, which expands the method of determining a channel/signal corresponding to each TCI state. Each channel/signal is transmitted by TRP(s) of a network device, so the TRP(s) corresponding to each channel/signal is also determined. Thus, a solution for determining a correspondence between TCI states and channel/signals is provided, and the terminal performs data transmission with the network device based on the determined TCI state, so as to ensure the quality of a transmitted signal, thereby ensuring the reliability of transmission.

In addition, how to indicate at least one set of TCI state will be explained below.

In a first manner, at least one set of TCI state is activated by means of the indication information.

The indication information includes first indication information, and the first indication information is used to activate at least one set of TCI state.

In an embodiment of the present disclosure, the first indication information is used to activate at least one set of TCI state. The activated at least one set of TCI state is the at least one set of TCI state indicated for the terminal in the present disclosure.

In some embodiments, the activated at least one set of TCI state is a TCI state corresponding to a code point of a TCI state indication field in a DCI (Downlink Control Information).

The DCI includes the TCI state indication field, the TCI state indication field includes a code point, and a corresponding TCI state is indicated via the code point.

In the embodiment of the present disclosure, the first indication information activates at least one set of TCI state, and the at least one set of TCI state serves as the at least one set of TCI state indicated by the first indication information. That is to say, the first indication information activates at least one set of TCI state corresponding to one code point in the TCI state indication field. Thus, no additional DCI signaling is required to indicate the code point corresponding to the TCI state field.

Optionally, the TCI state indication field includes a first number of bits, different values indicated by the first number of bits correspond to different code points, and each code point corresponds to at least one set of TCI state.

For example, the TCI state indication field includes 2 bits, and the 2 bits may include 00, 01, 10, and 11, that is, 2 bits may indicate 4 code points. The first indication information activates a TCI state corresponding to a first code point, where the TCI state corresponding to the first code point may be TCI state #1, or the TCI state corresponding to the first code point may be TCI state #2 and TCI state #3.

Optionally, the network device activates at least one set of TCI state for the terminal, and when receiving the first indication information, the terminal may determine the at least one set of TCI state activated by the first indication information.

In some embodiments, the first indication information is an MAC CE (Media Access Control Control Element). That is to say, the network device sends the MAC CE to the terminal, to activate and indicate the at least one set of TCI state by means of the MAC CE.

In the embodiment of the present disclosure, the MAC CE is used to activate at least one set of TCI state. The activated at least one set of TCI state is the at least one set of TCI state indicated for the terminal in the present disclosure.

In some embodiments, the activated at least one set of TCI state is a TCI state corresponding to a code point in the TCI state indication field in the DCI.

The DCI includes a TCI state indication field, the TCI state indication field may be used to indicate different code points, and corresponding TCI states are indicated by using the code points.

In the embodiment of the present disclosure, the MAC CE activates at least one set of TCI state, and the activated at least one set of TCI state may be taken as at least one set of TCI state indicated by the MAC CE. That is to say, the MAC CE activates at least one set of TCI state corresponding to a code point in the TCI state indication field. Thus, no additional DCI signaling is required to indicate the code point corresponding to the TCI state field.

Optionally, the TCI state indication field includes a first number of bits, different values indicated by the first number of bits correspond to different code points, and each code point corresponds to at least one set of TCI state.

Optionally, the network device activates at least one set of TCI state for the terminal, and upon receipt of an MAC CE, the terminal may determine at least one set of TCI state activated by the MAC CE.

In the solution provided by the embodiments of the present disclosure, at least one set of TCI state is directly activated by means of the indication information, and the activated at least one set of TCI state is the at least one set of TCI state indicated by the indication information for the terminal, so there is no need to use DCI signaling for indication, thereby saving signaling overhead. Furthermore, a solution for determining a correspondence between a TCI state and a channel/signal is provided, and data transmission is performed with a network device based on the determined TCI state, so as to ensure the quality of a transmitted signal, thereby ensuring the reliability of transmission.

In a second manner, at least one set of TCI state corresponding to each of at least two code points is activated by means of the indication information, and then one code point is indicated.

The indication information includes second indication information and third indication information. The second indication information is used to activate TCI states corresponding to at least two code points of a TCI state indication field in a DCI, and each code point corresponds to at least one set of TCI state. The third indication information is used to indicate one code point.

The DCI includes a TCI state indication field, the TCI state indication field includes a code point, and a corresponding TCI state is indicated by using the code point.

In the embodiment of the present disclosure, the second indication information is used to activate at least two code points, and each code point corresponds to at least one set of TCI state. In a case where the TCI states corresponding to at least two code points are activated, when the third indication information is used to indicate one code point, the terminal may determine at least one set of TCI state corresponding to the one code point indicated by the third indication information as the at least one set of TCI state indicated by the indication information.

Optionally, the TCI state indication field includes a second number of bits, different values indicated by the second number of bits correspond to different code points, and each of the code points correspond to at least one set of TCI state.

For example, the TCI state indication field includes 3 bits, and the 3 bits may include 8 values, that is, 3 bits may indicate 8 code points. The second indication information is used to activate a TCI state corresponding to a second code point and a TCI state corresponding to a third code point, where the second code point corresponds to TCI state #1 and TCI state #2, and the third code point corresponds to TCI state #3. If a code point indicated by the third indication information is the second code point, it means that the indicated TCI state(s) is TCI state #1 and TCI state #2.

In some embodiments, the second indication information is an MAC CE, and the third indication information is a DCI. That is to say, the network device sends the MAC CE to the terminal, to activate TCI states corresponding to at least two code points through the MAC CE, and then uses a DCI to indicate one code point.

The DCI includes a TCI state indication field, the TCI state indication field may indicate different code points, and corresponding TCI state(s) are indicated through the code point.

In the embodiment of the present disclosure, TCI states corresponding to at least two code points are activated through the MAC CE, and then one code point is indicated through the DCI. The terminal may determine at least one set of TCI state corresponding to one code point indicated by the DCI as the at least one set of TCI state indicated by the indication information.

Optionally, the network device configures at least one set of TCI state corresponding to each code point for the terminal; when receiving at least two code points activated by an MAC CE, the terminal may determine at least one set of TCI state corresponding to each of the code points activated by the MAC CE; and the network device uses a DCI to indicate one code point of the activated at least two code points, that is, to indicate at lea st one set of TCI state corresponding to the one code point.

In the solution provided by the embodiments of the present disclosure, TCI states corresponding to at least two code points are activated through the second indication information, and then one code point of the activated at least two code points is indicated through the third indication information, thereby improving the diversity of the indicated at least one set of TCI state. In addition, a solution for determining a correspondence between a TCI state and a channel/signal is provided, and then data transmission is performed with a network device based on the determined TCI state, so as to ensure the quality of a transmitted signal, thereby ensuring the reliability of transmission.

In some embodiments, the channel/signal includes at least one of the following:
(1) a PDCCH transmitted based on a CORESET (control resource set);
(2) a PUCCH transmitted periodically;
(3) a PUCCH transmitted semi-persistently;
(4) a PUSCH of configured grant type 1.

The SS set (Search Space set) associated with the CORESET corresponding to the PDCCH in the embodiments of the present disclosure includes various situations.

In some embodiments, the SS set associated with the CORESET corresponding to the PDCCH includes USS sets (UE-specific Search Space set) and/or Type3-PDCCH CSS sets (Common Search Space set).

In some other embodiments, the SS set associated with the CORESET corresponding to the PDCCH at least includes a CSS set other than the Type3-PDCCH CSS sets, and a unified TCI state is used for the CORESET.

The unified TCI state is the at least one set of TCI state indicated by the network device through the indication information in the above embodiments.

Optionally, the network device configures a unified TCI state for the terminal, and configures the CORESET to use the unified TCI state.

In some other embodiments, the CORESET corresponding to the PDCCH is CORESET#0, and the unified TCI state is used for the CORESET.

Optionally, the network device configures the unified TCI state for the terminal, and configures the CORESET to use the unified TCI state.

It should be noted that if the channel/signal in the embodiment of the present disclosure is a PDCCH transmitted based on a CORESET, the terminal determines the downlink TCI state or the joint TCI state in at least one set of TCI state corresponding to each PDCCH based on the indication information.

That is to say, the terminal determines the downlink TCI state among the at least one set of TCI state corresponding to each PDCCH based on the indication information. Alternatively, the terminal determines the joint TCI state among the at least one set of TCI state corresponding to each PDCCH based on the indication information, and the joint TCI state corresponds to a TCI state for downlink transmission.

In some embodiments, the terminal determines the downlink TCI state or the joint TCI state as a TCI state of a PDSCH or a CSI-RS scheduled by the PDCCH.

In the embodiment of the present disclosure, since a PDCCH can schedule a PDSCH or a CSI-RS, after determining the downlink TCI state or joint TCI state, the terminal uses the determined downlink TCI state or the determined joint TCI state as the TCI state of the PDSCH or the TCI state of the CSI-RS.

If the channel/signal in the embodiment of the present disclosure is a PDCCH transmitted based on a CORESET, the terminal determines the uplink TCI state or the joint TCI state among at least one set of TCI state corresponding to each PDCCH based on the indication information.

That is to say, the terminal determines the uplink TCI state among at least one set of TCI state corresponding to each PDCCH based on the indication information. Alternatively, the terminal determines the joint TCI state among at least one set of TCI state corresponding to each PDCCH based on the indication information, and the joint TCI state corresponds to a TCI state for uplink transmission.

In some embodiments, the uplink TCI state or the joint TCI state is determined as a TCI state of a PUCCH, or a PUSCH, or an SRS scheduled by each PDCCH.

In the embodiment of the present disclosure, since a PDCCH can schedule a PUCCH or a PUSCH or an SRS, after determining the uplink TCI state or the joint TCI state, the terminal uses the determined downlink TCI state or the determined joint TCI state as the TCI state of the PUCCH or the PUSCH or the SRS.

It should be noted that in the embodiment of the present disclosure, the network device may also configure a group identifier for the terminal through configuration information.

In some embodiments, the network device sends configuration information to the terminal, and the terminal receives the configuration information, where the configuration information is used to configure at least one group identifier for a channel/signal, and each group identifier corresponds to a unique set of TCI state.

Optionally, if the channel/signal is a PDCCH transmitted based on a CORESET, the configuration information is used to configure one or more group identifiers for a certain CORESET of the terminal, and groups corresponding to multiple group identifiers correspond to different sets of TCI states. Alternatively, if the channel/signal is a PUCCH or a PUSCH, the configuration information is used to configure one or more group identifiers for a certain PUCCH resource or a certain PUSCH of the terminal, and groups corresponding to multiple group identifiers correspond to different sets of TCI states.

In the solution provided by the embodiments of the present disclosure, the network device configures at least one group identifier for each channel/signal, an identifier of a group corresponding to the channel/signal may be determined based on the group identifier, and TCI state(s) corresponding to the channel/signal may be determined based on at least one set of TCI state corresponding to each group identifier, which ensures the accuracy of the determined at least one set of TCI state corresponding to each channel/signal, thereby ensuring the quality of transmitted signals, and thus ensuring the reliability of the transmission.

FIG. 6 shows a block diagram of a TCI state determination apparatus according to an embodiment of the present disclosure. Referring to FIG. 6, the apparatus includes: a receiving module 601 and a determining module 602.

The receiving module 601 is configured to receive indication information sent by a network device, where the indication information is used to indicate at least one set of transmission configuration indication (TCI) state, each set of TCI state includes at least one of an uplink TCI state or a downlink TCI state, or each set of TCI state includes a joint TCI state, where the joint TCI state is applied to both uplink transmission and downlink transmission.

The determining module 602 is configured to determine at least one set of TCI state corresponding to each channel/signal based on the indication information.

In some embodiments, the indication information is further used to indicate a group identifier corresponding to each set of TCI state, and the group identifier is an identifier of a group corresponding to the channel/signal.

In some embodiments, in a case where a number of the at least one set of TCI state is less than a number of groups corresponding to channels/signals, the indication information is further used to indicate the group identifier corresponding to each set of TCI state.

In some embodiments, the determining module 602 is further configured to determine at least one set of TCI state corresponding to a channel/signal indicated by each group identifier based on a mapping relationship, where the mapping relationship includes a correspondence between each group identifier and each set of TCI state.

In some embodiments, the determining module 602 is further configured to determine the at least one set of TCI state corresponding to the channel/signal indicated by each group identifier based on the mapping relationship in a case where a number of the at least one set of TCI state is equal to a number of groups corresponding to channels/signals, where the number of the at least one set of TCI state is an integer greater than 1.

In some embodiments, the indication information includes first indication information, and the first indication information is used to activate the at least one set of TCI state.

In some embodiments, the activated at least one set of TCI state is a TCI state corresponding to a code point of a TCI state indication field in a DCI.

In some embodiments, the indication information includes second indication information and third indication information; the second indication information is used to activate TCI states corresponding to at least two code points of a TCI state indication field in a DCI, and each of the code points corresponds to at least one set of TCI state; and the third indication information is used to indicate one code point.

In some embodiments, each of the first indication information and the second indication information is an MAC CE, and the third indication information is a DCI.

In some embodiments, the channel/signal includes at least one of the following:
a PDCCH transmitted based on a CORESET;
a PUCCH periodically transmitted;
a PUCCH transmitted semi-persistently;
a PUSCH of configured grant type 1.

In some embodiments, an SS set associated with the CORESET corresponding to the PDCCH includes USS sets and/or Type3-PDCCH CSS sets.

In some embodiments, an SS set associated with the CORESET corresponding to the PDCCH at least includes a CSS set other than Type3-PDCCH CSS sets, and a unified TCI state is used for the CORESET.

In some embodiments, the CORESET corresponding to the PDCCH is CORESET#0, and a unified TCI state is used for the CORESET.

In some embodiments, the determining module 602 is further configured to determine the downlink TCI state or the joint TCI state in at least one set of TCI state corresponding to each PDCCH based on the indication information.

In some embodiments, the determining module 602 is further configured to determine the downlink TCI state or the joint TCI state as a TCI state of a PDSCH or a CSI-RS scheduled by the PDCCH.

In some embodiments, the determining module 602 is further configured to determine the uplink TCI state or the joint TCI state in at least one set of TCI state corresponding to each PDCCH based on the indication information.

In some embodiments, the determining module 602 is further configured to determine the uplink TCI state or the joint TCI state as a TCI state of a PUCCH, or a PUSCH, or an SRS scheduled by each PDCCH.

In some embodiments, the group identifier includes at least one of the following:
CORESETPoolIndex;
a group identifier of CORESET;
a group identifier of PUCCH;
a group identifier of PUSCH.

In some embodiments, the receiving module 601 is further configured to receive configuration information, where the configuration information is used to configure at least one group identifier for the channel/signal, and each group identifier corresponds to a unique set of TCI state.

It should be noted that when the apparatus provided by the above embodiments implements functions thereof, the division of the above functional modules is only used as an example. In practical disclosures, the above functions may be allocated to different functional modules according to needs, that is, the internal structure of the apparatus is divided into different functional modules to complete all or part of the functions described above. In addition, the apparatus provided in the above embodiments belongs to the same concept as the method embodiments, and for the specific implementation processes thereof, reference is made to the method embodiments, which will not be described again here.

FIG. 7 shows a block diagram of a TCI state determination apparatus according to an embodiment of the present disclosure. Referring to FIG. 7, the apparatus includes: a sending module 701, configured to send indication information to a terminal, where the indication information is used to indicate at least one set of transmission configuration indication (TCI) state, each set of TCI state includes at least one of an uplink TCI state or a downlink TCI state, or each set of TCI state includes a joint TCI state, where the joint TCI state is applied to both uplink transmission and downlink transmission; and the indication information is used for the terminal to determine at least one set of TCI state corresponding to each channel/signal.

In some embodiments, the indication information is further used to indicate a group identifier corresponding to each set of TCI state, and the group identifier is an identifier of a group corresponding to the channel/signal.

In some embodiments, in a case where a number of the at least one set of TCI state is less than a number of groups corresponding to channels/signals, the indication information is further used to indicate the group identifier corresponding to each set of TCI state.

In some embodiments, the indication information is used for the terminal to determine at least one set of TCI state corresponding to a channel/signal indicated by each group identifier based on a mapping relationship, where the mapping relationship includes a correspondence between each group identifier and each set of TCI state.

In some embodiments, in a case where a number of the at least one set of TCI state is equal to a number of groups corresponding to channels/signals, the indication information is used for the terminal to determine the at least one set of TCI state corresponding to the channel/signal indicated by each group identifier based on the mapping relationship, where the number of the at least one set of TCI state is an integer greater than 1.

In some embodiments, the indication information includes first indication information, and the first indication information is used to activate the at least one set of TCI state.

In some embodiments, the activated at least one set of TCI state is a TCI state corresponding to a code point of a TCI state indication field in a downlink control information (DCI).

In some embodiments, the indication information includes second indication information and third indication information, the second indication information is used to activate TCI states corresponding to at least two code points of a TCI state indication field in a downlink control information (DCI), and each of the code points corresponds to at least one set of TCI state; and the third indication information is used to indicate one code point.

In some embodiments, the first indication information and the second indication information each is an MAC CE, and the third indication information is a DCI.

In some embodiments, the channel/signal includes at least one of the following:
a PDCCH transmitted based on a CORESET;
a PUCCH transmitted periodically;
a PUCCH transmitted semi-persistently;
a PUSCH of configured grant type 1.

In some embodiments, a search space set (SS set) associated with the CORESET corresponding to the PDCCH includes UE-specific search space sets (USS sets) and/or type 3 physical downlink control channel (Type3-PDCCH) common search space sets (CSS sets).

In some embodiments, an SS set associated with the CORESET corresponding to the PDCCH at least includes a CSS set other than Type3-PDCCH CSS sets, and a unified TCI state is used for the CORESET.

In some embodiments, the CORESET corresponding to the PDCCH is CORESET#0, and a unified TCI state is used for the CORESET.

In some embodiments, the indication information is further used for the terminal to determine the downlink TCI state or the joint TCI state in at least one set of TCI state corresponding to each PDCCH.

In some embodiments, the indication information is further used for the terminal to determine the uplink TCI state or the joint TCI state in at least one set of TCI state corresponding to each PDCCH.

In some embodiments, the group identifier includes at least one of the following:
CORESETPoolIndex;
a group identifier of CORESET;
a group identifier of PUCCH;
a group identifier of PUSCH.

In some embodiments, the sending module 701 is further configured to send configuration information, where the configuration information is used to configure at least one group identifier for the channel/signal, and each group identifier corresponds to a unique set of TCI state.

It should be noted that when the apparatus provided by the above embodiments implements functions thereof, the division of the above functional modules is only used as an example. In practical disclosures, the above functions may be allocated to different functional modules according to needs, that is, the internal structure of the apparatus is divided into different functional modules to complete all or part of the functions described above. In addition, the apparatus provided in the above embodiments belongs to the same concept as the method embodiments, and for the specific implementation processes thereof, reference is made to the method embodiments, which will not be described again here.

FIG. 8 shows a schematic structural diagram of a communication device according to an embodiment of the present disclosure. The communication device includes: a processor 801, a receiver 802, a transmitter 803, a memory 804 and a bus 805.

The processor 801 includes one or more processing cores. The processor 801 is configured to execute various functional application and information processing by running a software program and a module.

The receiver 802 and the transmitter 803 may be implemented as one communication component, and the communication component may be a communication chip.

The memory 804 is connected to the processor 801 through the bus 805.

The memory 804 may be configured to store at least one program code, and the processor 801 is configured to execute the at least one program code to implement each step in the above method embodiments.

Furthermore, the communication device may be a terminal or a network device. The memory 1004 may be implemented using any type of volatile or non-volatile memory devices, or a combination thereof, including but not limited to: a magnetic or optical disk, an Electrically-Erasable Programmable Read Only Memory (EEPROM), an Erasable Programmable Read Only Memory (EPROM), a Static Random-Access Memory (SRAM), a Read Only Memory (ROM), a magnetic memory, a flash memory, and a Programmable Read Only Memory (PROM).

In an exemplary embodiment, a computer-readable storage medium is further provided. The computer-readable storage medium stores an executable program code, and the executable program code is loaded and executed by a processor to implement the TCI state determination method provided by each of the method embodiments and performed by the communication device.

In an exemplary embodiment, a chip is provided. The chip includes a programmable logic circuit and/or program instructions. When the chip is run on a terminal or a network device, the chip is configured to implement the TCI state determination method provided by each of the method embodiments.

In an exemplary embodiment, a computer program product is provided. The computer program product, when executed by a processor of a terminal or a network device, is configured to implement the TCI state determination method provided by each of the above method embodiments.

Those of ordinary skill in the art may appreciate that all or part of the steps to implement the above embodiments may be completed by hardware, or may be completed by a using a program to instruct relevant hardware. The program may be stored in a computer-readable storage medium. The above-mentioned storage medium may be a read-only memory, a magnetic disk or an optical disk, etc.

The above embodiments are only optional embodiments of the present disclosure and are not intended to limit the present disclosure. Any modifications, equivalent substitutions, improvements, etc. made within the spirit and principle of the present disclosure shall be included in the protection scope of the present disclosure.

## Claims

1. A TCI state determination method, performed by a terminal, comprising:
receiving indication information sent by a network device, wherein the indication information is used to indicate at least one set of transmission configuration indication (TCI) state, each set of TCI state comprises at least one of an uplink TCI state or a downlink TCI state, or each set of TCI state comprises a joint TCI state, the joint TCI state is applied to both uplink transmission and downlink transmission; and
determining at least one set of TCI state corresponding to each channel/signal based on the indication information.

2. The TCI state determination method according to claim 1, wherein the indication information is further used to indicate a group identifier corresponding to each set of TCI state, and the group identifier is an identifier of a group corresponding to the channel/signal.

3. The TCI state determination method according to claim 2, wherein in a case where a number of the at least one set of TCI state is less than a number of groups corresponding to channels/signals, the indication information is further used to indicate the group identifier corresponding to each set of TCI state.

4. The TCI state determination method according to claim 1, wherein determining the at least one set of TCI state corresponding to each channel/signal based on the indication information comprises:
determining at least one set of TCI state corresponding to a channel/signal indicated by each group identifier based on a mapping relationship,
wherein the mapping relationship comprises a correspondence between each group identifier and each set of TCI state.

5. The TCI state determination method according to claim 4, wherein determining the at least one set of TCI state corresponding to the channel/signal indicated by each group identifier based on the mapping relationship comprises:
determining the at least one set of TCI state corresponding to the channel/signal indicated by each group identifier based on the mapping relationship in a case where a number of the at least one set of TCI state is equal to a number of groups corresponding to channels/signals, wherein the number of the at least one set of TCI state is an integer greater than 1.

6. The TCI state determination method according to any one of claims 2 to 5, wherein the indication information comprises first indication information, and the first indication information is used to activate the at least one set of TCI state.

7. The TCI state determination method according to claim 6, wherein the at least one set of TCI state activated is a TCI state corresponding to a code point of a TCI state indication field in downlink control information (DCI).

8. The TCI state determination method according to any one of claims 2 to 5, wherein the indication information comprises second indication information and third indication information; the second indication information is used to activate TCI states corresponding to at least two code points of a TCI state indication field in DCI, and each of the code points corresponds to at least one set of TCI state; and the third indication information is used to indicate one code point.

9. The TCI state determination method according to any one of claims 6 to 8, wherein the first indication information and the second indication information are a media access control control element (MAC CE), and the third indication information is DCI.

10. The TCI state determination method according to claim 1, wherein the channel/signal comprises at least one of the following:
a physical downlink control channel (PDCCH) transmitted based on a control resource set (CORESET);
a physical uplink control channel (PUCCH) transmitted periodically;
a physical uplink shared channel (PUCCH) transmitted semi-persistently;
a physical uplink shared channel (PUSCH) of configured grant type 1.

11. The TCI state determination method according to claim 10, wherein a search space set (SS set) associated with the CORESET corresponding to the PDCCH comprises UE-specific search space sets (USS sets) and/or type 3 physical downlink control channel (Type3-PDCCH) common search space sets (CSS sets).

12. The TCI state determination method according to claim 10, wherein an SS set associated with the CORESET corresponding to the PDCCH at least comprises a CSS set other than Type3-PDCCH CSS sets, and a unified TCI state is used for the CORESET.

13. The TCI state determination method according to claim 10, wherein the CORESET corresponding to the PDCCH is CORESET#0, and a unified TCI state is used for the CORESET.

14. The TCI state determination method according to claim 10, wherein determining the at least one set of TCI state corresponding to each channel/signal based on the indication information comprises:
determining the downlink TCI state or the joint TCI state in at least one set of TCI state corresponding to each PDCCH based on the indication information.

15. The TCI state determination method according to claim 14, further comprising:
determining the downlink TCI state or the joint TCI state as a TCI state of a physical downlink shared channel (PDSCH) or a channel state information reference signal (CSI-RS) scheduled by the PDCCH.

16. The TCI state determination method according to claim 10, wherein determining the at least one set of TCI state corresponding to each channel/signal based on the indication information comprises:
determining the uplink TCI state or the joint TCI state in at least one set of TCI state corresponding to each PDCCH based on the indication information.

17. The TCI state determination method according to claim 16, further comprising:
determining the uplink TCI state or the joint TCI state as a TCI state of a physical uplink control channel (PUCCH), or a physical uplink shared channel (PUSCH), or a sounding reference signal (SRS) scheduled by each PDCCH.

18. The TCI state determination method according to claim 2, wherein the group identifier comprises at least one of the following:
CORESETPoolIndex;
a group identifier of CORESET;
a group identifier of PUCCH;
a group identifier of PUSCH.

19. The TCI state determination method according to any one of claims 1 to 18, further comprising:
receiving configuration information, wherein the configuration information is used to configure at least one group identifier for the channel/signal, and each group identifier corresponds to a unique set of TCI state.

20. A TCI state determination method, performed by a network device, comprising:
sending indication information to a terminal, wherein the indication information is used to indicate at least one set of transmission configuration indication (TCI) state, each set of TCI state comprises at least one of an uplink TCI state or a downlink TCI state, or each set of TCI state comprises a joint TCI state, the joint TCI state is applied to both uplink transmission and downlink transmission; and
the indication information is used for the terminal to determine at least one set of TCI state corresponding to each channel/signal.

21. The TCI state determination method according to claim 20, wherein the indication information is further used to indicate a group identifier corresponding to each set of TCI state, and the group identifier is an identifier of a group corresponding to the channel/signal.

22. The TCI state determination method according to claim 21, wherein in a case where a number of the at least one set of TCI state is less than a number of groups corresponding to channels/signals, the indication information is further used to indicate the group identifier corresponding to each set of TCI state.

23. The TCI state determination method according to claim 20, wherein the indication information is used for the terminal to determine at least one set of TCI state corresponding to a channel/signal indicated by each group identifier based on a mapping relationship,
wherein the mapping relationship comprises a correspondence between each group identifier and each set of TCI state.

24. The TCI state determination method according to claim 23, wherein in a case where a number of the at least one set of TCI state is equal to a number of groups corresponding to channels/signals, the indication information is used for the terminal to determine the at least one set of TCI state corresponding to the channel/signal indicated by each group identifier based on the mapping relationship, wherein the number of the at least one set of TCI state is an integer greater than 1.

25. The TCI state determination method according to claim 21, wherein the indication information comprises first indication information, and the first indication information is used to activate the at least one set of TCI state.

26. The TCI state determination method according to claim 25, wherein the at least one set of TCI state activated is a TCI state corresponding to a code point of a TCI state indication field in downlink control information (DCI).

27. The TCI state determination method according to any one of claims 21 to 24, wherein the indication information comprises second indication information and third indication information, the second indication information is used to activate TCI states corresponding to at least two code points of a TCI state indication field in DCI, and each of the code points corresponds to at least one set of TCI state; and the third indication information is used to indicate one code point.

28. The TCI state determination method according to any one of claims 25 to 27, wherein the first indication information and the second indication information are an MAC CE, and the third indication information is the DCI.

29. The TCI state determination method according to claim 20, wherein the channel/signal comprises at least one of the following:
a PDCCH transmitted based on a CORESET;
a PUCCH transmitted periodically;
a PUCCH transmitted semi-persistently;
a PUSCH of configured grant type 1.

30. The TCI state determination method according to claim 29, wherein a search space set (SS set) associated with the CORESET corresponding to the PDCCH comprises UE-specific search space sets (USS sets) and/or type 3 physical downlink control channel (Type3 -PDCCH) common search space sets (CSS sets).

31. The TCI state determination method according to claim 29, wherein an SS set associated with the CORESET corresponding to the PDCCH at least comprises a CSS set other than Type3-PDCCH CSS sets, and a unified TCI state is used for the CORESET.

32. The TCI state determination method according to claim 29, wherein the CORESET corresponding to the PDCCH is CORESET#0, and a unified TCI state is used for the CORESET.

33. The TCI state determination method according to claim 29, wherein the indication information is further used for the terminal to determine the downlink TCI state or the joint TCI state in at least one set of TCI state corresponding to each PDCCH.

34. The TCI state determination method according to claim 29, wherein the indication information is further used for the terminal to determine the uplink TCI state or the joint TCI state in at least one set of TCI state corresponding to each PDCCH.

35. The TCI state determination method according to any one of claims 21 to 34, wherein the group identifier comprises at least one of the following:
CORESETPoolIndex;
a group identifier of CORESET;
a group identifier of PUCCH;
a group identifier of PUSCH.

36. The TCI state determination method according to any one of claims 20 to 35, further comprising:
transmitting configuration information, wherein the configuration information is used to configure at least one group identifier for the channel/signal, and each group identifier corresponds to a unique set of TCI state.

37. A TCI state determination apparatus, comprising:
a receiving module, configured to receive indication information sent by a network device, wherein the indication information is used to indicate at least one set of TCI state, each set of TCI state comprises at least one of an uplink TCI state or a downlink TCI state, or each set of TCI state comprises a joint TCI state, the joint TCI state is applied to both uplink transmission and downlink transmission; and
a determining module, configured to determine at least one set of TCI state corresponding to each channel/signal based on the indication information.

38. A TCI state determination apparatus, comprising:
a sending module, configured to send indication information to a terminal, wherein the indication information is used to indicate at least one set of TCI state, each set of TCI state comprises at least one of an uplink TCI state or a downlink TCI state, or each set of TCI state comprises a joint TCI state, the joint TCI state is applied to both uplink transmission and downlink transmission; and
the indication information is used for the terminal to determine at least one set of TCI state corresponding to each channel/signal.

39. A terminal, comprising:
a processor; and
a transceiver connected to the processor,
wherein the processor is configured to load and execute executable instructions to implement the TCI state determination method according to any one of claims 1 to 19.

40. A network device, comprising:
a processor; and
a transceiver connected to the processor,
wherein the processor is configured to load and execute executable instructions to implement the TCI state determination method according to any one of claims 20 to 36.

41. A computer-readable storage medium, wherein an executable program code is stored in the computer-readable storage medium, and the executable program code is loaded and executed by a processor to implement the TCI state determination method according to any one of claims 1 to 36.
